# EUROPÄISCHE PATENTSCHRIFT

(11) **EP 2 482 109 B1**
(45) Veröffentlichungstag und Bekanntmachung des Hinweises auf die Patenterteilung: **13.03.2024**
(21) Anmeldenummer: 12150005.2
(22) Anmeldetag: 02.01.2012
(51) Int. Cl.: G02B 6/38

(54) **Zugbegrenzungselement für eine faseroptische Verbindung, sowie Patchcord und Pigtail mit diesem Zugbegrenzungselement**
Traction limiting element for a fibre optic connection, patch cable and pigtail with this traction limiting element
Elément de limitation de traction pour une liaison à fibre optique ainsi que cordon de brassage et système torsadé doté de cet élément de limitation de traction

(30) Priorität: 28.01.2011 CH 1562011
(43) Veröffentlichungstag der Anmeldung: 01.08.2012
(73) Patentinhaber: Diamond SA, 6616 Losone (CH)
(72) Erfinder: Coggi, Victor, 6616 Losone (CH); Minazzi, Maurizio, 21010 Germignaga (IT)
(74) Vertreter: Hepp Wenger Ryffel AG

(56) Entgegenhaltungen:
- EP-A1- 0 510 240
- EP-A2- 0 973 234
- DE-U1- 29 918 358
- JP-A- 60 205 511
- JP-A- 60 205 512
- JP-A- S59 126 508
- US-A- 6 152 608

## Beschreibung

Die vorliegende Erfindung betrifft ein Zugbegrenzungselement für eine faseroptische Verbindung, sowie ein Patchcord und ein Pigtail mit einem Zugbegrenzungselement.

Aus dem Stand der Technik sind faseroptische Verbinder, insbesondere Steckverbinder bekannt. Diese Verbinder erlauben ein einfaches Erstellen einer faseroptischen Verbindung, welche sogar von einem Laien erstellt werden kann. Aufgrund der immer höheren Datenmenge, welche selbst in privaten Haushalten erforderlich ist, wird vielerorts bereits das Glasfasernetz bis ins Haus bzw. in die Wohnung installiert, so dass ein Breitbandanschluss zur Verfügung steht. Selbst Endgeräte werden schon direkt an das Glasfasernetz angeschlossen. Herkömmliche faseroptische Verbinder verfügen meist über eine formschlüssige Verriegelung, so dass keine ungewollte Trennung der faseroptischen Verbindung erfolgen kann. Werden nun solche Verbinder auch in Heimanwendungen eingesetzt, besteht einerseits ein erhebliches Verletzungsrisiko, da solche faseroptischen Verbindungen als Stolperfallen wirken können und die Verbindung bei übermässiger Zugbelastung am Verbinder nicht getrennt wird. Auf der anderen Seite kann es vorkommen, dass durch solche Stolperunfälle das Endgerät oder aber die Installationsdose in der Zimmerwand beschädigt wird. Sowohl Beschädigungen am Endgerät als auch an der Installationsdose führen zu langwierigen und kostenintensiven Reparaturen. Der Benutzer kann das entsprechende Endgerät oder aber den Breitbandanschluss bis nach erfolgter Reparatur nicht mehr nutzen.

JP60205511A und JP60205512A offenbaren eine faseroptische Steckverbindung. Die eine Hälfte der Steckverbindung weist seitlich Rastarme auf, welche am Gegenstück in entsprechende Nuten eingreifen.

EP 0 510 240 A1_offenbart eine faseroptische Steckverbindung, welche mit einer Sicherungsnuss vor unerwünschtem Auftrennen geschützt werden kann. Eine ähnliche faseroptische Steckverbindung ist auch in der US6152608 gezeigt.

Es ist Aufgabe der Erfindung, die Nachteile des Standes der Technik zu überwinden. Insbesondere soll ein Zugbegrenzungselement für eine faseroptische Verbindungsleitung, sowie ein Patchcord und ein Pigtail mit einem Zugbegrenzungselement zur Verfügung gestellt werden, welches bei Überschreiten einer maximal zulässigen Zugkraft die faseroptische Verbindung trennt.

Diese Aufgabe wird durch ein Zugbegrenzungselement gemäss Anspruch 1, sowie durch ein Patchcord und ein Pigtail gemäss den Ansprüchen 15 und 16 gelöst. Weitere Ausführungsformen ergeben sich aus den abhängigen Patentansprüchen.

Ein erfindungsgemässes Zugbegrenzungselement für eine faseroptische Verbindung enthält mindestens eine erste und eine zweite Aufnahmevorrichtung, sowie Mittel, welche eine Trennung der faseroptischen Verbindung an einem vordefinierten Ort erlauben. Dabei weisen beide Aufnahmevorrichtungen einen Aufnahmekörper auf. Dieser Aufnahmekörper umfasst eine Aufnahme zum Aufnehmen und Fixieren einer oder mehrerer optischen Fasern parallel zu einer Achsrichtung sowie Verbindungsmittel zum Verbinden der ersten mit der zweiten Aufnahmevorrichtung. Die Verbindungsmittel sind so ausgestaltet, dass die Verbindung zwischen der ersten und zweiten Aufnahmevorrichtung unter Einwirkung einer vorbestimmten oder vorbestimmbaren Zugkraft trennbar ist. Es ist insbesondere denkbar, dass die Zugkraft innerhalb vorgegebener Grenzen individuell eingestellt oder einstellbar ist. So kann beispielsweise die Zugkraft zwischen 5 und 30 N, bevorzugt zwischen 10 und 25 N, besonders bevorzugt zwischen 15 und 20 N eingestellt oder einstellbar sein. Der Aufnahmekörper der einen Aufnahmevorrichtung weist eine Spannzange mit Schlitzen und mehreren Zungen auf und die Verbindungsmittel sind an der Zunge der Spannzange angeordnet. Unter einer Spannzange wird hier und im Folgenden jedes Mittel verstanden, welches ein Gegenstück umschliesst und dabei so geschlitzt ist, dass sein Innendurchmesser mindestens in einem Teilbereich veränderbar ist. Die in der Zugbegrenzung angeordnete Faser wird durch die Spannzange optimal vor Ausseneinflüssen geschützt. Ausserdem wird mit einer Spannzange ein einfaches Verbinden der beiden Aufnahmevorrichtungen ermöglicht.

Die Verbindungsmittel können Rastmittel sein. Somit wird eine einfache Installation der Zugbegrenzung ermöglicht. Die Verbindungsmittel können jedoch auch alternative Formen aufweisen, wie beispielsweise eine Magnetverbindung oder eine stoffschlüssige Verbindung mit Sollbruchstellen.

Mindestens ein Verbindungsmittel des Aufnahmekörpers der ersten Aufnahmevorrichtung kann eine Rastnase aufweisen. Diese Rastnase steht vorzugsweise von einer Aussenfläche des Aufnahmekörpers vor und ist mindestens teilweise umlaufend ausgebildet. Entsprechend kann mindestens ein Verbindungsmittel des Aufnahmekörpers der zweiten Aufnahmevorrichtung eine Rastkante aufweisen, welche mit der Rastnase der ersten Aufnahmevorrichtung verrastbar ist. Es versteht sich von selbst, dass die Rastnase bzw. die Rastkante auch auf dem Aufnahmekörper der anderen Aufnahmevorrichtung angeordnet sein kann. Anstelle einer Kombination von Rastnase und Rastkante sind beispielsweise eine halbkugelförmige vorstehende Struktur und eine entsprechende Ausnehmung im gegenüberliegenden Aufnahmekörpers denkbar. Ausserdem ist es denkbar, dass beide Aufnahmekörper je über eine Kombination aus Rastnase und Rastkante verfügen. Rastnase und Rastkante sind dann an jedem Aufnahmekörper versetzt angeordnet. Selbstverständlich sind die Rastnase und die Rastkante der beiden Aufnahmekörper zueinander ausgerichtet, so dass eine Rastverbindung erstellt werden kann. Die Rastnase und/oder die Rastkante können rampenförmig ausgebildet sein. Durch den Neigungswinkel der Rampe kann die Entriegelungskraft des Verbindungsmittels und somit auch die maximal vom Zugbegrenzungselement aufnehmbare Zugkraft beeinflusst werden. Dieser Neigungswinkel beträgt vorzugsweise zwischen 45° und 60°. Selbstverständlich kann diese Entriegelungskraft auch durch andere Mittel wie beispielsweise die Dimensionierung der Zunge oder das verwendete Material kontrolliert werden.

Die Zunge kann aus einem elastischen Material, vorzugsweise aus Kunststoff, besonders bevorzugt aus Polyamid (PA) oder Polyetherimid (PEI) bestehen. Andere Materialien sind ebenfalls denkbar. Durch eine geeignete Materialwahl kombiniert mit der konstruktiven Ausgestaltung, insbesondere der Dicke und der Länge der Zunge kann, wie bereits erwähnt, die für die Trennung der optischen Verbindung benötigte Zugkraft eingestellt werden.

Ein Sicherungselement ist um eine in Achsrichtung verlaufende Drehachse drehbar über der Zunge angeordnet, so dass die Klemmkraft der Zunge dann je nach Ausrichtung beeinflussbar ist. Ein hülsenförmiges Sicherungselement würde dann über eine Ausnehmung verfügen, welche entsprechend der Zunge angeordnet ist. Die Klemmkraft der Zunge würde dann entsprechend der Drehposition der Ausnehmung beeinflusst.

Das Sicherungselement ist in eine offene Position verdrehbar, in der kein Einfluss auf die Klemmkraft der Zunge ausgeübt wird. Eine solche Position ist insbesondere für die Montage der Zugbegrenzung vorteilhaft, weil dann die Verbindungsmittel auch beim Zusammenbau die geringste Kraft ausüben. Entsprechend ist das Sicherungselement in eine Schliessposition verdrehbar, wo jede Bewegung der Zunge blockiert wird. In einer solchen Schliessposition überdeckt das Sicherungselement die Zunge komplett. Selbstverständlich kann das Sicherungselement jede Lage zwischen der offenen Position und der Schliessposition einnehmen, so dass die Zugkraft stufenlos eingestellt werden kann.

Die Aufnahmekörper können einen Befestigungsbereich, insbesondere einen Crimphals, zum Befestigen einer Zugentlastung eines faseroptischen Kabels aufweisen. Durch einen solchen Befestigungsbereich wir sichergestellt, dass eine auf die Zugbegrenzung wirkende Zugspannung, welche kleiner als die zum Trennen benötigte Zugkraft ist, nicht auf die Faser einwirkt und gegebenenfalls eine Verschlechterung der Übertragungsqualität bewirkt oder gar die Faser beschädigt. Es ist jedoch auch denkbar, dass die Zugbegrenzung nicht mit einem faseroptischen Kabel mit Zugentlastung, sondern nur mit einer Faser, welche eine einfache Kunststoffummantelung aufweist bestückt wird.

Jede Aufnahme zum Aufnehmen und Fixieren einer oder mehrerer optischen Fasern kann mindestens eine herkömmliche Ferrule umfassen. Ausserdem können diese Ferrulen entsprechend die Mittel zur Trennung der faseroptischen Verbindung sein. Unter einer herkömmlichen Ferrule wird beispielsweise ein Steckerstift mit mindestens einer Bohrung zur Aufnahme einer optischen Faser verstanden. Bekannt sind insbesondere die Ferrulen mit einem Aussendurchmesser von 2.5mm und 1.25mm für Glasfasern. Ebenso wird aber unter einer Ferrule beispielsweise auch eine MT-Ferrule verstanden, welche insbesondere zwei oder mehrere Fasern aufnehmen kann. Selbstverständlich kann eine Ferrule auch eine andere Form aufweisen und/oder insbesondere auch für Kunststofffasern ausgebildet sein. Es versteht sich von selbst, dass die Endflächen der Ferrulen und entsprechen auch der optischen Fasern so bearbeitet sein müssen, dass eine dem Anwendungszweck entsprechende Datenübertragung gewährleistet werden kann. Dadurch, dass Ferrulen zum Erstellen und Trennen der optischen Verbindung verwendet werden, kann das Zugbegrenzungselement nach einer durch übermässige Zuglast bewirkten Trennung wieder verwendet werden und die optische Verbindung bei entsprechender Ausgestaltung der Aufnahmevorrichtungen einfach durch Zusammenstecken wieder erstellt werden.

Die Ferrule der Aufnahme der ersten Aufnahmevorrichtung kann fest mit dem Aufnahmekörper verbunden sein. Bei optischen Verbindungen mit Ferrulen müssen die Ferrulen mit ihren Endflächen mit einem genau definierten Druck aufeinander treffen, um eine geeignete Übertragungsqualität zu ermöglichen. Um diesen Druck zu gewährleisten kann die Ferrule der Aufnahme der zweiten Aufnahmevorrichtung in Achsrichtung federnd mit dem Aufnahmekörper verbunden sein. Es versteht sich von selbst, dass hier wiederum die gefederte bzw. die fest verbundene Ferrule vertauscht werden können. Ebenso ist es denkbar, dass beide Ferrulen federnd mit dem entsprechenden Aufnahmekörper verbunden sind.

Wie bei optischen Verbindern mit Ferrulen üblich, können die Ferrulen mittels einer oder mehrerer Führungshülsen aufeinander ausgerichtet sein. Solche Führungshülsen sind dem Fachmann insbesondere für Ferrulen mit einem Durchmesser von 2.5mm bzw. 1.25mm als geschlitzte Hülsen, so genannte Sleeves bekannt. Die Führungshülse kann am Aufnahmekörper der fixen Ferrule befestigt sein.

Alternativ zu einer Ferrule kann die erste Aufnahmevorrichtung ein Mittel umfasst, welches beim Trennen der ersten von der zweiten Aufnahmevorrichtung eine im Zugbegrenzungselement angeordnete optische Faser durchtrennt. Dabei ist es nicht relevant, ob dieses Mittel in der ersten oder der zweiten Aufnahmevorrichtung angeordnet ist. Der Aufnahmekörper kann dabei direkt so ausgestaltet sein, dass er als Aufnahme für die Fasern dient. Eine solche Lösung kann unabhängig von der vorab genannten Lösung der Spannzange realisiert werden.

Das Mittel zum Trennen der optischen Faser kann eine Klinge sein, welche quer zu zur Achsrichtung bewegbar ist. Dabei kann die Klinge ein Blechbiegeteil, vorzugsweise aus einem Federstahl, sein. Neben einer Klinge zum Durchtrennen der Faser sind auch andere Mittel denkbar. Beispielsweise könnten Scherkräfte auf die Faser einwirken, welche die Faser zum Brechen bringen. Die Faser könnte aber auch angeritzt und unter Zug gesetzt werden, was ebenfalls zu einem Faserbruch führen würde.

Die Klinge kann am Aufnahmekörper der ersten Aufnahmevorrichtung angeordnet sein und die zweite Aufnahmevorrichtung kann eine Rampe aufweisen. Diese Rampe könnte so ausgestaltet sein, dass beim Trennen der beiden Aufnahmevorrichtungen die Rampe mit der Klinge derart in Wirkverbindung bringbar ist, dass die Klinge verschoben wird und eine im Zugbegrenzungselement angeordnete Faser durchtrennbar ist. Es versteht sich wiederum von selbst, dass Klinge und Rampe vertauschbar sind.

Der Aufnahmekörper einer Aufnahmevorrichtung kann ersetzbar sein durch einen Einziehkopf, wobei der Einziehkopf ein Befestigungselement zum Befestigen einer Einzuglitze aufweist. Ein derart modifiziertes Zugbegrenzungselement dient zwar nicht mehr der Trennung einer faseroptischen Verbindungsleitung, kann jedoch beispielsweise als Schutzvorrichtung dienen, wenn eine vormontierte optische Faser in einen Kabelkanal oder in ein Installationsrohr eingezogen werden soll. Das Befestigungsmittel am Einziehkopf kann beispielsweise als Bohrung oder Öffnung quer zur Achsrichtung ausgestaltet sein.

Ein erfindungsgemässes Patchcord umfasst ein faseroptisches Kabel mit beidseitig angeordneten faseroptischen Verbindern, sowie zwischen den beiden Verbindern ein Zugbegrenzungselement wie vorgängig beschrieben und in Anspruch 1 definiert.

Ein solches Patchcord kann ähnlich einem elektrischen CAT5-Netzwerk-Patchkabel von einem Heimanwender direkt mit einem entsprechen ausgerüsteten Endgerät sowie mit einer entsprechenden Datendose verbunden werden. Somit wird bei übermässiger Zug-Beanspruchung die faseroptische Verbindung getrennt, bevor die Datendose oder das Endgerät beschädigt werden. Ein erfindungsgemässes Pigtail umfasst ein faseroptisches Kabel mit einem einseitig angeordneten faseroptischen Verbinder sowie ein auf dem faseroptischen Kabel, vorzugsweise nahe am faseroptischen Verbinder angebrachtes Zugbegrenzungselement, wie vorgängig beschrieben und in Anspruch 1 definiert.

Dabei wird unter nah ein Bereich von 0mm bis 1000mm, vorzugsweise 50mm bis 500mm, besonders bevorzugt 100mm bis 250mm verstanden.

Anhand von Figuren wird die Erfindung im Folgenden näher erläutert. Es zeigen:
- Figur 1:: ein nicht erfindungsgemässes Zugbegrenzungselement konfektioniert auf einem faseroptischen Kabel, wobei sich ein Sicherungselement in einer Schliessposition befindet,
- Figur 2:: das Zugbegrenzungselement gemäss Figur 1, wobei Knickschutztüllen abgezogen sind und sich das Sicherungselement in einer offenen Position befindet,
- Figur 3:: eine erste Ausführungsform eines nicht erfindungsgemässen Zugbegrenzungselementes in einer Explosionszeichnung,
- Figur 4:: das Zugbegrenzungselement aus Figur 3 nach der Trennung der optischen Verbindung durch Überschreiten der eingestellten Zugkraft,
- Figur 5a:: einen Längsschnitt durch das fertig konfektionierte Zugbegrenzungselement gemäss Figur 3,
- Figur 5b:: eine Detailansicht auf den Bereich A gemäss Figur 5a,
- Figur 6:: eine zweite Ausführungsform eines nicht erfindungsgemässen Zugbegrenzungselementes in einer Explosionszeichnung,
- Figur 7:: das Zugbegrenzungselement aus Figur 6, einseitig fertig konfektioniert, jedoch noch nicht zusammengesteckt,
- Figur 8:: das Zugbegrenzungselement aus Figur 6 nach der Trennung der optischen Verbindung durch Überschreiten der eingestellten Zugkraft,
- Figur 9:: einen Längsschnitt durch das fertig konfektionierte Zugbegrenzungselement gemäss Figur 6,
- Figur 10:: ein aufgetrenntes Zugbegrenzungselement in einer Ausführungsform ohne Sicherungselement,
- Figur 11:: eine Ausführungsform eines aufgetrennten Zugbegrenzungselementes mit Sicherungselement gemäss der Erfindung
- Figur 12a:: ein Zugbegrenzungselement mit einer Einziehhilfe vor dem Verbinden, und
- Figur 12b:: das Zugbegrenzungselement gemäss Figur 12a bereit zum Einziehen.

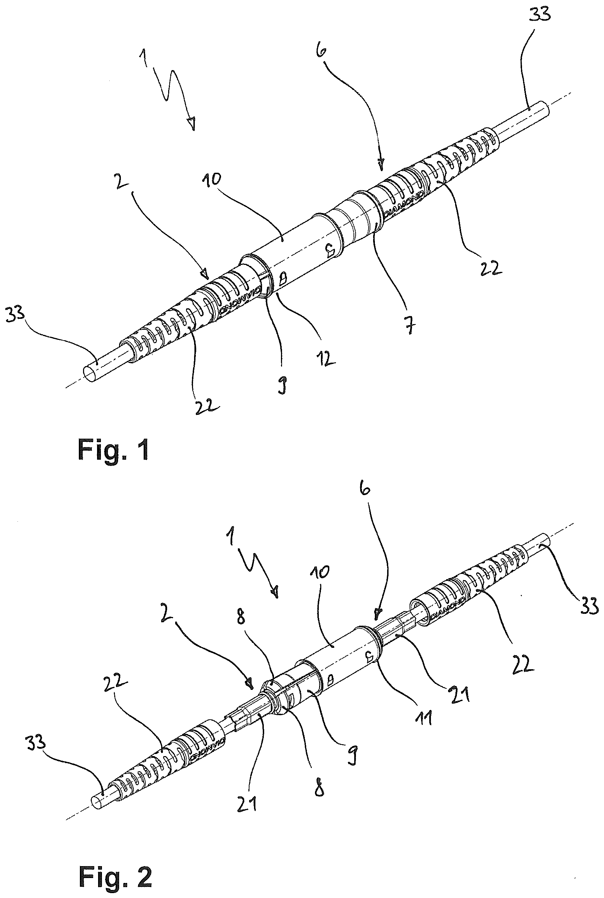

Figur 1 zeigt ein nicht erfindungsgemässes Zugbegrenzungselement 1 konfektioniert auf einem faseroptischen Kabel 33, wobei sich ein Sicherungselement 10 in einer Schliessposition 12 befindet. Das Zugbegrenzungselement 1 weist zwei Aufnahmevorrichtungen 2, 6 auf. Unter dem Sicherungselement 10 ist eine Spannzange 9 eines Aufnahmekörpers 7 der Aufnahmevorrichtung 6 zu erkennen. Das Zugbegrenzungselement 1 ist beidseitig mit Knickschutztüllen 22 versehen, welche das konfektionierte Kabel 33 im Bereich des Zugbegrenzungselementes 1 vor übermässiger Biegebelastung schützt.

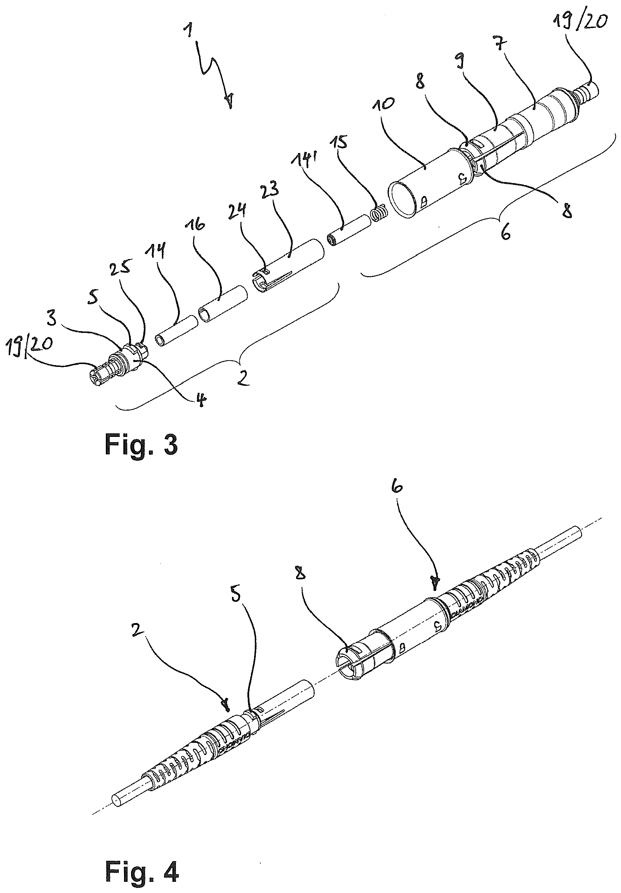

In Figur 2 ist das Zugbegrenzungselement 1 gemäss Figur 1 dargestellt, wobei die Knickschutztüllen 22 abgezogen und sich das Sicherungselement 10 in einer offenen Position 11 befindet. Ebenfalls erkennbar sind Crimphülsen 21, welche im Normalfall von den Knickschutztüllen 22 abgedeckt werden. Mit Hilfe dieser Crimphülsen 21 ist eine Zugentlastung, meist eine Vielzahl von Aramidfasern, des Kabels 33 an einem Crimphals 20 (siehe Figur 3) der Aufnahmevorrichtung 2, 6 befestigt. Weil sich das Sicherungselement 10 in der offenen Position 11 befindet, ist jetzt deutlich die Spannzange 9 mit mehreren Zungen 8 der Aufnahmevorrichtung 6 sichtbar. Die Zungen 8 sind dabei mit Rastnasen 5 (siehe Figur 3) verriegelt und bilden die eigentliche Zugbegrenzung.

Figur 3 zeigt eine erste Ausführungsform eines nicht erfindungsgemässen Zugbegrenzungselementes 1 in einer Explosionszeichnung. Dabei umfasst eine erste Aufnahmevorrichtung 2 ein Aufnahmekörper 3, eine Ferrule 14, eine Führungshülse 16 und ein Hülsenhalter 23. Eine zweite Aufnahmevorrichtung 6 umfasst wiederum einen Aufnahmekörper 7 und eine Ferrule 14', ein Sicherungselement 10 und eine Feder 15. Im zusammengebauten Zustand ist die Ferrule 14 fest mit dem Aufnahmekörper 3 verbunden. Wie bei herkömmlichen Steckverbindern üblich, werden die Ferrulen 14, 14' der beiden Aufnahmevorrichtungen 2, 6 mittels der Führungshülse 16 aufeinander ausgerichtet. Der Hülsenhalter 23 dient der Befestigung der Führungshülse 16 am Aufnahmekörper 3. Hierzu ist dieser in einem Endbereich geschlitzt und verfügt über Ausnehmungen 24 welche mit vorstehenden Elementen 25 des Aufnahmekörpers 3 verrastbar sind. Ausserdem weist der Aufnahmekörper 3 noch Rastnasen 5 auf, mit welchen die Zungen 8 der Spannzange 9 des Aufnahmekörpers 7 der zweiten Aufnahmevorrichtung 6 verrasten können. Die Rastnasen 5 stehen von einer Aussenfläche 4 des Aufnahmekörpers 3 ab. Die Ferrule 14' der zweiten Aufnahmevorrichtung 6 ist mit dem Aufnahmekörper 7 federnd verbunden. Die Feder 15 gewährleistet im konfektionierten Zustand, dass die Endflächen der beiden Ferrulen 14, 14' mit dem nötigen Anpressdruck aufeinander treffen. Beide Aufnahmekörper 3, 9 weisen einen Befestigungsbereich 19 in Form eines Crimphalses 20 zum Befestigen einer Zugentlastung eines Kabels auf.

In der Figur 4 ist die Situation dargestellt, in der das Zugbegrenzungselement aus Figur 3 durch Überschreiten der maximal zulässigen Zugkraft ausgelöst hat und die optische Verbindung entsprechend getrennt wurde. Die Zungen 8 haben sich von den Rastnasen 5 gelöst, die beiden Aufnahmevorrichtungen 2, 6 sind voneinander getrennt und entsprechend sind die Ferrulen (nicht sichtbar) ausgesteckt.

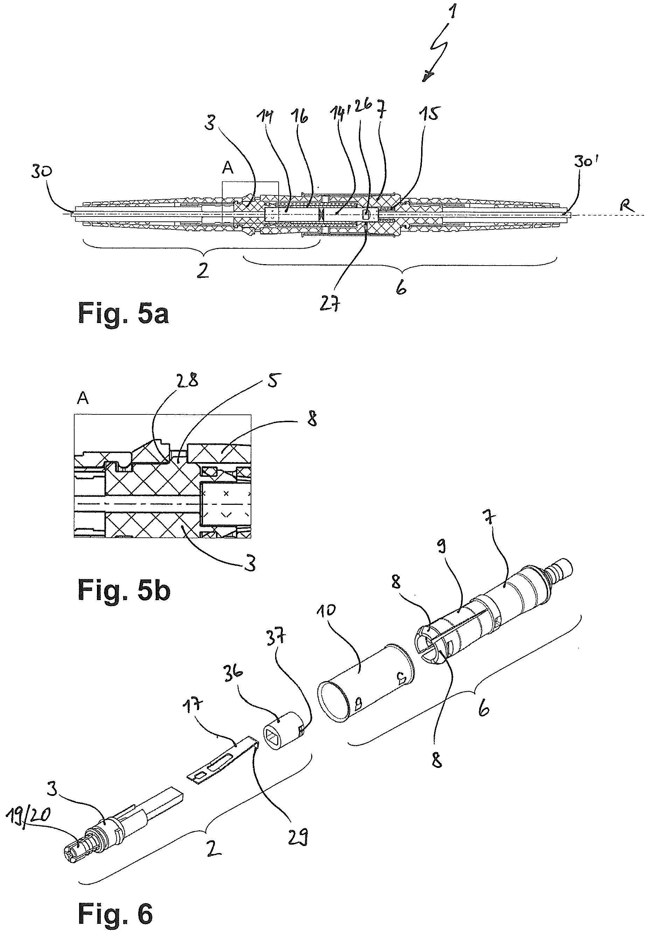

Die Figur 5a zeigt einen Längsschnitt durch das fertig konfektionierte Zugbegrenzungselement 1 gemäss Figur 3. Die Faser 30 wird von der einen Seite in die fixierte Ferrule 14 der ersten Aufnahmevorrichtung 2 geführt und mittels der Führungshülse 16 auf die federnde Ferrule 14' der zweiten Aufnahmevorrichtung ausgerichtet. Von der anderen Seite wird eine Faser 30' in die federnde Ferrule 14' der zweiten Aufnahmevorrichtung 6 geführt, so dass die beiden Fasern 30, 30' eine optische Verbindung herstellen. Die Fasern 30, 30' sind dabei in die entsprechenden Ferrulen 14, 14' eingeklebt und die Endflächen der Ferrulen 14, 14' bearbeitet. Die Ferrule 14' der zweiten Aufnahmevorrichtung 6 ist federnd im Aufnahmekörper 7 befestigt. Hierzu verfügt die Ferrule 14' über eine Nut 26 in welche ein geschlitzter Ring 27 eingeschoben ist. Dieser Ring 27 sichert die Ferrule 14', lässt jedoch in Achsrichtung R ein geringe Längsverschiebung zu, so das die Feder 15 die Toleranzen der einzelnen Bauteile aufnehmen kann und einen genügenden Anpressdruck der beiden Endflächen der Ferrulen 14, 14' gewährleistet.

Figur 5b zeigt eine Detailansicht auf den Bereich A gemäss Figur 5a. Dabei ist insbesondere stark vergrössert die Rastnase 5 des Aufnahmekörpers 3 dargestellt. Ebenfalls erkennbar ist das vordere Ende einer Zunge 8, welche auf die Rastnase 5 aufgeschnappt ist. Sowohl die Rastnase 5 als auch Rastkante 28 der Zunge 8 weisen einen Neigungswinkel auf. Im dargestellten Beispiel beträgt dieser Neigungswinkel 55°. Anhand dieses Neigungswinkels sowie mit anderen Parametern kann die für die Trennung der optischen Verbindung benötigte Zugkraft eingestellt werden. Es ist auch Denkbar, dass nur die Rastkante 28 oder die Rastnase 5 einen Neigungswinkel aufweist.

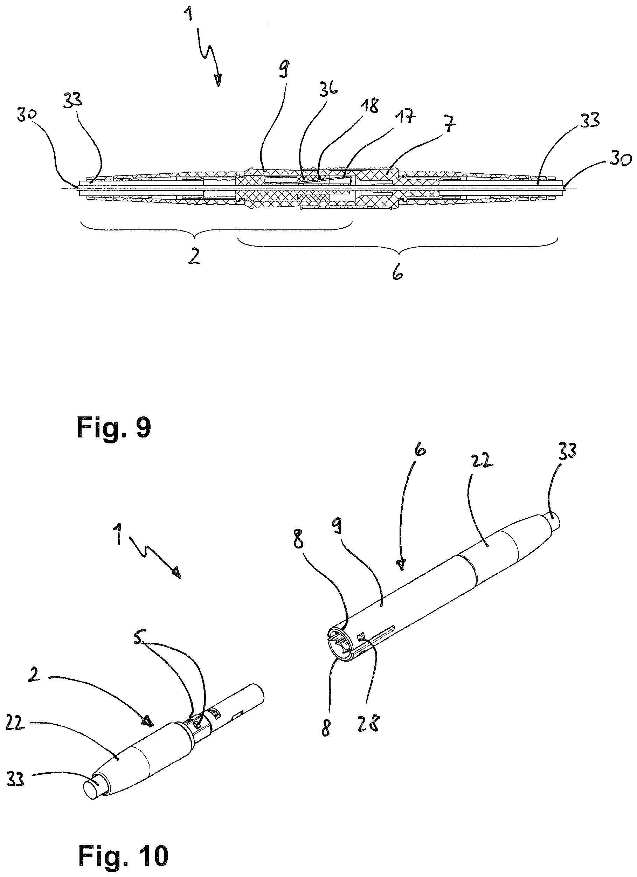

Dargestellt in Figur 6 ist eine zweite Ausführungsform eines nicht erfindungsgemässen Zugbegrenzungselementes in einer Explosionszeichnung. Eine erste Aufnahmevorrichtung 2 umfasst einen Aufnahmekörper 3 und ein Fasertrennmittel in Form einer Klinge 17 und eine Auslösehülse 36. Die Klinge 17 ist als Blechbiegeteil ausgestaltet und weist an ihrem vorderen Ende eine Schneidkante 29 auf, mit welcher eine im Zugbegrenzungselement angeordnete Faser durchtrennt werden kann. Die Klinge 17 wird direkt auf dem Aufnahmekörper 3 befestigt. Dabei weist der Aufnahmekörper 3 eine Faserführung auf, auf deren Vorderkante im montierten Zustand die Schneidekante 29 der Klinge 17 ausgerichtet ist. Die Auslösehülse 36 weist eine hohlzylindrische Form auf, wobei auf der Innenseite der Auslösehülse 36 eine Rampe 18 (siehe Figur 9) angeordnet ist, welche mit der Klinge 17 im montierten Zustand in Wirkverbindung steht. Ausserdem weist die Auslösehülse 36 auf ihrer Aussenseite Rastmittel 37 auf, welche eine Befestigung mit einem Aufnahmekörper 7 innerhalb einer Spannzange 9 einer zweiten Aufnahmevorrichtung 6 erlauben. Diese zweite Aufnahmevorrichtung 6 umfasst den Aufnahmekörper 7 mit der Spannzange 9 und mehreren Zungen 8, sowie ein Sicherungselement 10. Beide Aufnahmekörper 3, 7 weisen einen Befestigungsbereich 19 in Form eines Crimphalses 20 zum Befestigen einer Zugentlastung eines Kabels auf.

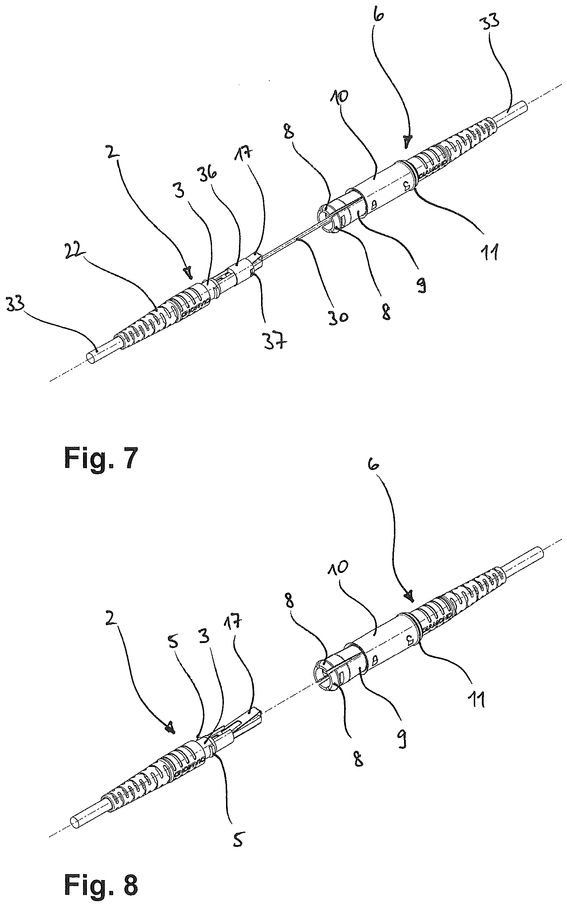

Figur 7 zeigt das Zugbegrenzungselement aus Figur 6, einseitig fertig konfektioniert, jedoch noch nicht zusammengesteckt. Über der Klinge 17 und der Faserführung der ersten Aufnahmevorrichtung 2 ist die Auslösehülse 36 angeordnet. Die Faserführung weist eine Bohrung auf, welche die Faser 30 aufnimmt. Die Klinge 17 berührt die Faser 30 nicht. Die Faser 30 stammt von einem Kabel 33, welches mit seiner Zugentlastung auf einem Crimphals 20 mittels einer Crimphülse 21 (beide siehe Figur 9) unter einer Knickschutztülle 22 befestigt ist. Die zweite Aufnahmevorrichtung 6 ist vorbereitet zur Installation, das Sicherungselement 10 ist entsprechend in einer offenen Position 11, so dass die Zungen 8 der Spannzange 9 leicht zu öffnen sind. Die Faser 30 wird nun in die Aufnahmevorrichtung 6 eingeführt und bleibt im Aufnahmekörper vorerst frei beweglich. Beim Zusammenstecken der beiden Aufnahmevorrichtungen 2, 6 wird die Auslösehülse 36 in die Spannzange 9 eingeführt und mit ihrem Rastmitteln 37 im Innern der Spannzange 9 verrastet. Anschliessend wird ein Kabelmantel mit integrierter Zugbelastung auf die Faser 30 aufgeschoben. Durch die Crimpung der Zugentlastung des Kabels 33 auf den Crimphals 20 werden das Kabel und somit auch die Faser 30 festgehalten. Da der Befestigungsbereich 19 (siehe Figur 6) mit einem Kreuzschlitz versehen ist, wird bei erfolgter Crimpung auch die Faser 30 mechanisch festgeklemmt. Es versteht sich von selbst, dass zusätzlich oder anstelle dieser mechanischen Fixierung der Faser 30 auch ein Verkleben der Faser 30 im Aufnahmekörper 3 denkbar ist.

In der Figur 8 wird das Zugbegrenzungselement aus Figur 6 nach der Trennung der optischen Verbindung durch Überschreiten der eingestellten Zugkraft gezeigt. Nach dem Lösen der Zungen 8 von den Rastnasen 5 werden die beiden Aufnahmevorrichtungen 2, 6 auseinander gezogen. Die Auslösehülse 36 (siehe Figur 7), welche in der Spannzange 9 verrastet ist, wird nun vom Aufnahmekörper 3 abgezogen. Die Rampe 18 (siehe Figur 9) bewegt sich dabei über die Klinge 17 und bewirkt eine Verschiebung der Klinge 17 in Richtung auf die Faser 30 (siehe Figur 7). Die Faser 30 wird von der Klinge 17 durchtrennt. Die für diese Trennung benötigte Zugkraft ist abhängig von der Position des Sicherungselementes 10.

In der gezeigten Darstellung ist das Sicherungselement 10 in einer offenen Position 11, so dass es keinen oder nur einen geringen Einfluss auf die Zugkraft hat. Die Zugkraft ist somit nur durch die Materialwahl der Spannzange 9 bzw. der Zungen 8, sowie durch die mechanische Ausgestaltung der Zungen 8 und der Rastnase 5 abhängig.

Figur 9 zeigt einen Längsschnitt durch das fertig konfektionierte Zugbegrenzungselement 1 gemäss Figur 6. Dabei ist die Auslösehülse 36 zu erkennen, welche in der Spannzange 9 des Aufnahmekörpers 7 verrastet ist. Die Auslösehülse 36 weist auf ihrer Innenseite eine Rampe 18 auf, welche mit der Klinge 17 in Wirkverbindung steht. Wenn die beiden Aufnahmevorrichtungen 2, 6 auseinander gezogen werden, d.h. wenn die Zugkraft auf das Kabel 33 grösser als die eingestellte maximal zulässige Zugkraft des Zugbegrenzungselementes ist, wird die Auslösehülse 36 mit ihrer Rampe 18 über die Klinge 17 gleiten und die Klinge somit auf die Faser 30 drücken. Die Faser 30 wird somit durchtrennt.

Figur 10 zeigt in einer perspektivischen Darstellung ein aufgetrenntes Zugbegrenzungselement 1 in einer alternativen Ausführungsform ohne Sicherungselement. Es sind zwei korrespondierende Aufnahmevorrichtungen 2, 6 dargestellt, wobei die erste Aufnahmevorrichtung 2 mit Rastnasen 5 versehen ist. Entsprechend ist die Aufnahmevorrichtung 6 mit einer Spannzange 9 in Form einer teilweise geschlitzten Hülse und zwei Zungen 8 ausgerüstet. Die Zungen 8 sind mit Rastkanten 28 versehen, welche in Öffnungen der Zungen angeordnet sind. Beide Aufnahmevorrichtungen 2, 6 sind mit Knickschutztüllen 22 versehen, welche das Kabel 33 vor Verletzungen schützen.

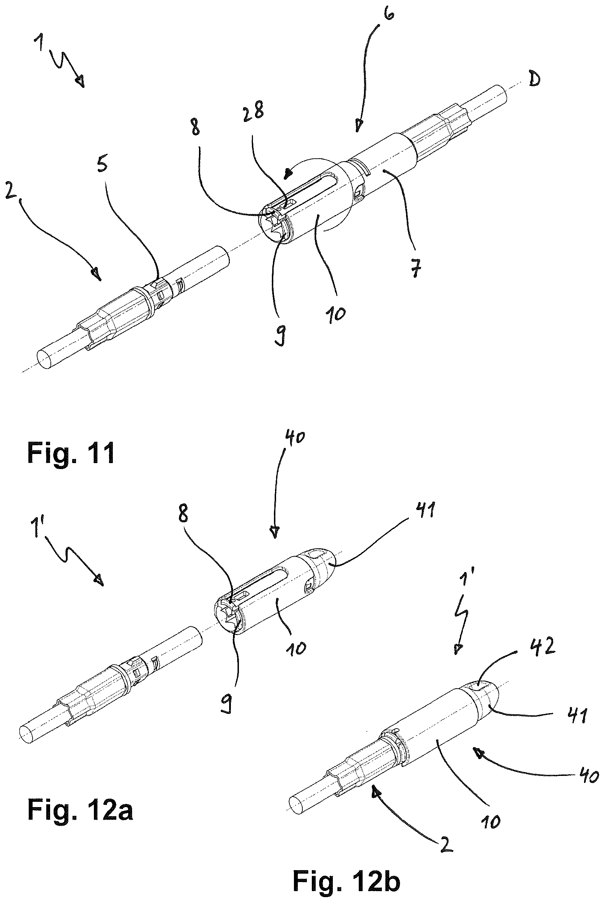

In Figur 11 ist eine erste erfindungsgemässe Ausführungsform eines aufgetrennten Zugbegrenzungselementes 1 dargestellt. Dieses Zugbegrenzungselement 1 weist ein Sicherungselement 10 auf. Die erste Aufnahmevorrichtung 2 ist mit einer Rastnase 5 ausgerüstet, welche mit einer entsprechenden Rastkante 28 der zweiten Aufnahmevorrichtung 6 zusammenwirken kann. Die zweite Aufnahmevorrichtung 6 weist wiederum einen Aufnahmekörper 7 mit einer Spannzange 9 mit Zungen 8 auf. Die Rastkante 28 ist in einer Öffnung der Zunge 8 angeordnet. Über der Spannzange 9 ist eine Hülse als Sicherungselement 10 vorgesehen, welche um eine Drehachse D auf der Spannzange drehbar ist. Das Sicherungselement 10 weist eine Aussparung auf, welche im dargestellten Zustand die Zunge 8 frei lässt, so dass die Zunge 8 frei beweglich ist. Durch ein Verdrehen des Sicherungselementes 10 in Pfeilrichtung kann die Zunge 8 blockiert werden, so dass das Zugbegrenzungselement 1 eine feste Verbindung gewährleistet.

Die Figur 12a zeigt ein modifiziertes Zugbegrenzungselement 1' gemäss Figur 11, wobei der Aufnahmekörper 7 der zweiten Aufnahmevorrichtung 6 (siehe Figur 11) durch einen Einziehkopf 41 ersetzt wurde. Die Aufnahmevorrichtung 6 aus Figur 11 wird entsprechend zu einer Einziehhilfe 40, welche jedoch identisch zur Aufnahmevorrichtung 6 aus Figur 11 mit einer Spannzange 9 mit Zungen 8 und einem Sicherungselement 10 versehen ist.

In Figur 12b ist das modifizierte Zugbegrenzungselement 1' aus Figur 12b im zusammengesteckten Zustand dargestellt. Dabei ist das Sicherungselement 10 verdreht, so dass die erste Aufnahmevorrichtung 2 fest mit der Einziehhilfe 40 verbunden ist. Diese Funktion ist insbesondere wichtig beim Einziehen eines Kabels in einen Kabelkanal oder in ein Installationsrohr. Zum Befestigen beispielsweise einer Einzugslitze an der Einziehhilfe 40 ist der Einziehkopf 41 mit einer Öffnung 42 versehen.

## Patentansprüche

1. Zugbegrenzungselement (1) für eine faseroptische Verbindungsleitung enthaltend:
- eine erste und eine zweite Aufnahmevorrichtung (2, 6),
- Mittel, welche eine Trennung der faseroptischen Verbindung an einem vordefinierten Ort erlauben,
wobei die erste und die zweite Aufnahmevorrichtung (2, 6) je einen Aufnahmekörper (3, 7) aufweisen, welcher
- eine Aufnahme zum Aufnehmen und Fixieren einer oder mehrerer optischen Fasern (30, 30') parallel zu einer Achsrichtung (R) aufweist und
- Verbindungsmittel zum Verbinden der ersten mit der zweiten Aufnahmevorrichtung (2, 6) aufweist,
wobei die Verbindungsmittel so ausgestaltet sind, dass die Verbindung zwischen der ersten und zweiten Aufnahmevorrichtung (2, 6) unter Einwirkung einer vorbestimmten oder vorbestimmbaren Zugkraft trennbar ist,
wobei der Aufnahmekörper (7) der einen Aufnahmevorrichtung (6) eine Spannzange (9) mit Schlitzen und mehreren Zungen (8) aufweist und die Verbindungsmittel an der Zunge (8) der Spannzange (9) angeordnet sind, wobei die Spannzange (9) der einen Aufnahmevorrichtung (6) und ein Gegenstück der anderen Aufnahmevorrichtung (2) derart ausgestaltet sind, dass die Spannzange (9) das Gegenstück umschliessen kann, wobei die Spannzange (9) derart geschlitzt ist, dass ein Innendurchmesser der Spannzange (9) mindestens in einem Teilbereich veränderbar ist,
**dadurch gekennzeichnet, dass** über der Zunge (8) ein um eine in Achsrichtung (R) verlaufende Drehachse (D) drehbares Sicherungselement (10) angeordnet ist, so dass je nach Position des Sicherungselementes (10) eine Klemmkraft der Zungen (8) beeinflussbar ist, wobei das Sicherungselement (10) in eine offene Position (11), in der kein Einfluss auf die Klemmkraft der Zungen (8) ausgeübt wird, und in eine Schliessposition (12), wo jede Bewegung der Zungen(8) blockiert wird, verdrehbar ist.

2. Zugbegrenzungselement (1) nach Anspruch 1, **dadurch gekennzeichnet, dass** die Verbindungsmittel Rastmittel sind.

3. Zugbegrenzungselement (1) nach Anspruch 1 oder 2, **dadurch gekennzeichnet, dass** mindestens ein Verbindungsmittel des Aufnahmekörpers (3) der ersten Aufnahmevorrichtung (2) eine Rastnase (5) aufweist, welche von einer Aussenfläche (4) des Aufnahmekörpers (3) vorsteht und mindestens teilweise umlaufend ausgebildet ist.

4. Zugbegrenzungselement (1) nach Anspruch 3, **dadurch gekennzeichnet, dass** mindestens ein Verbindungsmittel des Aufnahmekörpers (7) der zweiten Aufnahmevorrichtung (6) eine Rastkante (28) aufweist, welche mit der Rastnase (5) der ersten Aufnahmevorrichtung (2) verrastbar ist.

5. Zugbegrenzungselement (1) nach einem der Ansprüche 1 bis 4, **dadurch gekennzeichnet, dass** die Zunge (8) aus einem elastischen Material, vorzugsweise aus Kunststoff, besonders bevorzugt aus Polyamid (PA) oder Polyetherimid (PEI) besteht.

6. Zugbegrenzungselement (1) nach einem der Ansprüche 1 bis 5, **dadurch gekennzeichnet, dass** die Aufnahmekörper (3, 7) einen Befestigungsbereich (19) zum Befestigen einer Zugentlastung eines faseroptischen Kabels (33) aufweisen.

7. Zugbegrenzungselement (1) nach einem der Ansprüche 1 bis 6, **dadurch gekennzeichnet, dass** jede Aufnahme zum Aufnehmen und Fixieren einer oder mehrerer optischen Fasern mindestens eine herkömmliche Ferrule (14, 14') umfasst und dass diese Ferrulen (14, 14') die Mittel zur Trennung der faseroptischen Verbindung sind.

8. Zugbegrenzungselement (1) nach Anspruch 7, **dadurch gekennzeichnet, dass** die Ferrule (14) der Aufnahme der ersten Aufnahmevorrichtung (2) fest mit dem Aufnahmekörper (3) verbunden ist.

9. Zugbegrenzungselement (1) nach Anspruch 7 oder 8, **dadurch gekennzeichnet, dass** die Ferrule (14') der Aufnahme der zweiten Aufnahmevorrichtung (6) in Achsrichtung (R) federnd mit dem Aufnahmekörper (7) verbunden ist.

10. Zugbegrenzungselement (1) nach einem der Ansprüche 7 bis 9, **dadurch gekennzeichnet, dass** die Ferrulen (14, 14') mittels einer oder mehrerer Führungshülsen (16) aufeinander ausgerichtet sind.

11. Zugbegrenzungselement (1) nach einem der Ansprüche 1 bis 6, **dadurch gekennzeichnet, dass** die erste Aufnahmevorrichtung (2) ein Mittel umfasst, welches beim Trennen der ersten von der zweiten Aufnahmevorrichtung (6) eine im Zugbegrenzungselement (1) angeordnete optische Faser (30, 30') durchtrennt.

12. Zugbegrenzungselement (1) nach Anspruch 11, **dadurch gekennzeichnet, dass** das Mittel zum Trennen der optischen Faser eine Klinge (17) ist, welche quer zu zur Achsrichtung (R) bewegbar ist.

13. Zugbegrenzungselement (1) nach Anspruch 12, **dadurch gekennzeichnet, dass** die Klinge (17) ein Blechbiegeteil, vorzugsweise aus einem Federstahl, ist.

14. Zugbegrenzungselement (1) nach Anspruch 12 oder 13, **dadurch gekennzeichnet, dass** die Klinge (17) am Aufnahmekörper (3) der ersten Aufnahmevorrichtung (2) angeordnet ist und die zweite Aufnahmevorrichtung (6) eine Rampe (18) aufweist, welche beim Trennen der beiden Aufnahmevorrichtungen (2, 6) mit der Klinge (17) derart in Wirkverbindung bringbar ist, dass eine im Zugbegrenzungselement (1) angeordnete Faser (30, 30') durchtrennbar ist.

15. Patchcord bestehend aus einem faseroptischen Kabel (33) mit beidseitig angeordneten faseroptischen Verbindern, **dadurch gekennzeichnet, dass** zwischen den beiden Verbindern ein Zugbegrenzungselement (1) gemäss einem der Ansprüche 1 bis 14 angeordnet ist.

16. Pigtail bestehend aus einem faseroptischen Kabel (33) mit einem einseitig angeordneten faseroptischen Verbinder, **dadurch gekennzeichnet, dass** auf dem faseroptischen Kabel (33), vorzugsweise nahe am faseroptischen Verbinder ein Zugbegrenzungselement (1) gemäss einem der Ansprüche 1 bis 14 angeordnet ist.

## Claims

1. Tension limiting element (1) for a fibre optic connection line:
- a first and a second receiving device (2, 6),
- Means that allow the fibre optic connection to be disconnected at a predefined location,
wherein the first and the second receiving device (2, 6) each have a receiving body (3, 7) which
- has a holder for receiving and fixing one or more optical fibres (30, 30') parallel to an axial direction (R) and
- connecting means for connecting the first to the second receiving device (2, 6),
wherein the connecting means are designed such that the connection between the first and second receiving devices (2, 6) can be separated under the action of a predetermined or predeterminable tensile force,
wherein the receiving body (7) of one receiving device (6) has a collet chuck (9) with slots and a plurality of tongues (8) and the connecting means are arranged on the tongue (8) of the collet chuck (9), wherein the collet chuck (9) of the one holding device (6) and a counterpart of the other holding device (2) are designed in such a way that the collet chuck (9) can enclose the counterpart, wherein the collet chuck (9) is slotted in such a way that an internal diameter of the collet chuck (9) can be varied at least in a partial region,
**characterised in that** a securing element (10) rotatable about an axis of rotation (D) extending in the axial direction (R) is arranged above the tongue (8), so that a clamping force of the tongues (8) can be influenced depending on the position of the securing element (10), wherein the securing element (10) can be rotated into an open position (11), in which no influence is exerted on the clamping force of the tongues (8), and into a closed position (12), where any movement of the tongues (8) is blocked.

2. Tension limiting element (1) according to claim 1, **characterised in that** the connecting means are latching means.

3. Tension limiting element (1) according to claim 1 or 2, **characterised in that** at least one connecting means of the receiving body (3) of the first receiving device (2) has a latching lug (5) which projects from an outer surface (4) of the receiving body (3) and is designed to be at least partially circumferential.

4. Tension limiting element (1) according to claim 3, **characterised in that** at least one connecting means of the receiving body (7) of the second receiving device (6) has a latching edge (28) which can be latched to the latching lug (5) of the first receiving device (2).

5. Tension limiting element (1) according to one of claims 1 to 4, **characterised in that** the tongue (8) consists of an elastic material, preferably of plastic, particularly preferably of polyamide (PA) or polyetherimide (PEI).

6. Tension limiting element (1) according to one of claims 1 to 5, **characterised in that** the receiving bodies (3, 7) have a fastening region (19) for fastening a strain relief of a fibre-optic cable (33).

7. A tension limiting element (1) according to any one of claims 1 to 6, **characterised in that** each receptacle for receiving and fixing one or more optical fibres comprises at least one conventional ferrule (14, 14') and **in that** these ferrules (14, 14') are the means for separating the optical fibre connection.

8. Tension limiting element (1) according to claim 7, **characterised in that** the ferrule (14) of the receptacle of the first receiving device (2) is firmly connected to the receiving body (3) .

9. Tension limiting element (1) according to claim 7 or 8, **characterised in that** the ferrule (14') of the receptacle of the second receiving device (6) is resiliently connected to the receiving body (7) in the axial direction (R).

10. Tension limiting element (1) according to one of claims 7 to 9, **characterised in that** the ferrules (14, 14') are aligned with one another by means of one or more guide sleeves (16).

11. Tension limiting element (1) according to one of claims 1 to 6, **characterised in that** the first receiving device (2) comprises a means which, when separating the first from the second receiving device (6), cuts through an optical fibre (30, 30') arranged in the tension limiting element (1).

12. Tension limiting element (1) according to claim 11, **characterised in that** the means for separating the optical fibre is a blade (17) which is movable transversely to the axial direction (R).

13. Tension limiting element (1) according to claim 12, **characterised in that** the blade (17) is a sheet metal bending part, preferably made of a spring steel.

14. Tension limiting element (1) according to claim 12 or 13, **characterised in that** the blade (17) is arranged on the receiving body (3) of the first receiving device (2) and the second receiving device (6) has a ramp (18) which, when the two receiving devices (2, 6) are separated, can be brought into operative connection with the blade (17) in such a way that a fibre (30, 30') arranged in the tension limiting element (1) can be severed.

15. Patch cord consisting of a fibre-optic cable (33) with fibre-optic connectors arranged on both sides, **characterised in that** a tension limiting element (1) according to one of claims 1 to 14 is arranged between the two connectors.

16. Pigtail consisting of a fibre-optic cable (33) with a fibre-optic connector arranged at one end, **characterised in that** a tension limiting element (1) according to one of claims 1 to 14 is arranged on the fibre-optic cable (33), preferably close to the fibre-optic connector.

## Revendications

1. Elément de limitation de traction (1) pour une ligne de connexion à fibres optiques :
- un premier et un deuxième dispositif de réception (2, 6),
- des moyens permettant la séparation de la ligne de connexion à fibres optiques à un endroit prédéfini,
le premier et le deuxième dispositif de réception (2, 6) présentant chacun un corps de réception (3, 7), qui
- un logement pour recevoir et fixer une ou plusieurs fibres optiques (30, 30') parallèlement à une direction d'axe (R) et
- des moyens de connexion pour connecter le premier et le deuxième dispositif de réception (2, 6),
les moyens de connexion étant conçus de telle sorte que la connexion entre le premier et le deuxième dispositif de réception (2, 6) puisse être séparée sous l'effet d'une force de traction prédéterminée ou pouvant être prédéterminée,
le corps de réception (7) de l'un des dispositifs de réception (6) présentant une pince de serrage (9) avec des fentes et plusieurs languettes (8) et les moyens de connexion étant disposés sur la languette (8) de la pince de serrage (9), la pince de serrage (9) de l'un des dispositifs de réception (6) et une contre-pièce de l'autre dispositif de réception (2) étant conçues de telle sorte que la pince de serrage (9) puisse entourer la contre-pièce, la pince de serrage (9) étant fendue de telle sorte qu'un diamètre intérieur de la pince de serrage (9) puisse être modifié au moins dans une zone partielle,
**caractérisé en ce qu'**un élément de sécurité (10) pouvant tourner autour d'un axe de rotation (D) s'étendant dans la direction axiale (R) est disposé au-dessus de la languette (8), de sorte qu'une force de serrage des languettes (8) peut être influencée en fonction de la position de l'élément de sécurité (10), l'élément de sécurité (10) pouvant être tourné dans une position ouverte (11), dans laquelle aucune influence n'est exercée sur la force de serrage des languettes (8), et dans une position de fermeture (12), dans laquelle tout mouvement des languettes (8) est bloqué.

2. Elément de limitation de traction (1) selon la revendication 1, **caractérisé en ce que** les moyens de connexion sont des moyens d'encliquetage.

3. Elément de limitation de traction (1) selon la revendication 1 ou 2, **caractérisé en ce qu'**au moins un moyen de connexion du corps de réception (3) du premier dispositif de réception (2) présente un ergot d'encliquetage (5) qui fait saillie d'une surface extérieure (4) du corps de réception (3) et qui est réalisé au moins partiellement de manière périphérique.

4. Elément de limitation de traction (1) selon la revendication 3, **caractérisé en ce qu'**au moins un moyen de connexion du corps de réception (7) du deuxième dispositif de réception (6) présente une arête d'encliquetage (28) qui peut être encliquetée avec le nez d'encliquetage (5) du premier dispositif de réception (2).

5. Elément de limitation de traction (1) selon l'une des revendications 1 à 4, **caractérisé en ce que** la languette (8) est constituée d'un matériau élastique, de préférence d'une matière plastique, de manière particulièrement préférée de polyamide (PA) ou de polyétherimide (PEI).

6. Elément de limitation de traction (1) selon l'une des revendications 1 à 5, **caractérisé en ce que** les corps de réception (3, 7) présentent une zone de fixation (19) pour fixer une décharge de traction d'un câble à fibres optiques (33) .

7. Elément de limitation de traction (1) selon l'une quelconque des revendications 1 à 6, **caractérisé en ce que** chaque logement destiné à recevoir et à fixer une ou plusieurs fibres optiques comprend au moins une férule classique (14, 14') et **en ce que** ces férules (14, 14') sont les moyens de séparation de la liaison par fibre optique.

8. Elément de limitation de traction (1) selon la revendication 7, **caractérisé en ce que** la férule (14) du logement du premier dispositif de réception (2) est solidaire du corps de réception (3).

9. Elément de limitation de traction (1) selon la revendication 7 ou 8, **caractérisé en ce que** la férule (14') du logement du deuxième dispositif de réception (6) est reliée élastiquement au corps de réception (7) dans la direction axiale (R).

10. Elément de limitation de traction (1) selon l'une des revendications 7 à 9, **caractérisé en ce que** les férules (14, 14') sont alignées l'une sur l'autre au moyen d'une ou plusieurs douilles de guidage (16).

11. Elément de limitation de traction (1) selon l'une des revendications 1 à 6, **caractérisé en ce que** le premier dispositif de réception (2) comprend un moyen qui, lors de la séparation du premier et du deuxième dispositif de réception (6), sectionne une fibre optique (30, 30') disposée dans l'élément de limitation de traction (1).

12. Elément de limitation de traction (1) selon la revendication 11, **caractérisé en ce que** le moyen de séparation de la fibre optique est une lame (17) qui est mobile transversalement à la direction axiale (R).

13. Elément de limitation de traction (1) selon la revendication 12, **caractérisé en ce que** la lame (17) est une pièce pliée en tôle, de préférence en acier à ressort.

14. Elément de limitation de traction (1) selon la revendication 12 ou 13, **caractérisé en ce que** la lame (17) est disposée sur le corps de réception (3) du premier dispositif de réception (2) et le deuxième dispositif de réception (6) présente une rampe (18) qui, lors de la séparation des deux dispositifs de réception (2, 6), peut être amenée en liaison active avec la lame (17) de telle sorte qu'une fibre (30, 30') disposée dans l'élément de limitation de traction (1) peut être sectionnée.

15. Cordon de brassage constitué d'un câble à fibres optiques (33) avec des connecteurs à fibres optiques disposés des deux côtés, **caractérisé en ce qu'**un élément de limitation de traction (1) selon l'une des revendications 1 à 14 est disposé entre les deux connecteurs.

16. Pigtail constitué d'un câble à fibres optiques (33) avec un connecteur à fibres optiques disposé d'un côté, **caractérisé en ce qu'**un élément de limitation de traction (1) selon l'une des revendications 1 à 14 est disposé sur le câble à fibres optiques (33), de préférence à proximité du connecteur à fibres optiques.
